# EUROPEAN PATENT APPLICATION

(11) **EP 1 400 542 A1**
(43) Date of publication of application: **24.03.2004**
(21) Application number: 02726465.4
(22) Date of filing: 23.05.2002
(51) Int. Cl.: C08F 220/14, G02B 1/04

(54) **METHACRYLIC RESIN AND USE THEREOF**

(30) Priority: 23.05.2001 JP 2001153742; 29.10.2001 JP 2001330102; 13.02.2002 JP 2002034744; 05.03.2002 JP 2002059248
(71) Applicant: Mitsui Chemicals, Inc., Tokyo 100-6070 (JP)
(72) Inventor: KAWASAKI, Noboru, c/o MITSUI CHEMICALS, INC., Sodegaura-shi, Chiba 299-0265 (JP); SASAGAWA, Katsuyoshi, c/o MITSUI CHEMICALS, INC., Sodegaura-shi, Chiba 299-0265 (JP); ENNA, Masahiro, c/o MITSUI CHEMICALS, INC., Sodegaura-shi, Chiba 299-0265 (JP)
(74) Representative: Ford, Michael Frederick
(86) International application number: PCT/JP2002/004998
(87) International publication number: WO 2002/094896

(57) **Abstract**

A methacrylic resin produced by copolymerizing a composition in the presence of a radical initiator, the composition comprising methyl methacrylate and a specified compound. Further, there are provided transparent members including a transparent member for automobile and a transparent member for display, which are produced by molding the above methacrylic resin. A methacrylic resin which is excellent in transparency, heat resistance, chemical resistance and impact resistance can be produced with high productivity without the occurrence of runaway of polymerization reaction. The transparent members including a transparent member for automobile and a transparentmemberfordisplay, produced by molding the above methacrylic resin, are excellent in properties such as transparency, heat resistance and impact resistance.

## Description

### TECHNICAL FIELD

The present invention relates to a methacrylic resin and a transparent member formed from the methacrylic resin. More particularly, the present invention relates to a methacrylic resin produced by copolymerizing methyl methacrylate (MMA) and a specified compound, and relates to transparent members, including a transparent member for display and a transparent member for automobile, constituted of the methacrylic resin.

### BACKGROUND ART

Methacrylic resins (PMMA) are excellent in transparency, weight lightness, weatherability, etc., thereby finding wide uses in glazing materials for vehicles andbuildings, signboards, covers of measuring instruments, a front panel of flat panel display (FPD), a light guide panel of LCD, etc. However, methacrylic resins have a drawback in that the heat resistance and chemical resistance thereof are poor as compared with those of a polycarbonate resin or the like, thereby naturally limiting the scope of use thereof. Further, it is demanded formethacrylic resins to have an enhanced impact resistance, depending on the field of use.

As means for improving the heat resistance of methacrylic resins, it has been proposed to employ, for example, a method of copolymerizing methyl methacrylate mixed with cyclohexyl methacrylate, or a method of copolymerizing methyl methacrylate mixed with maleic anhydride and styrene (see Japanese Patent Laid-open Publication No. 58(1983)-87104). However, the thus obtained methacrylic resins have a linear structure, so that an improvement of chemical resistance thereof cannot be recognized.

On the other hand, there have been made a multiplicity of proposals directed to a method of copolymerizing methyl methacrylate with various polyhydric alcohol acrylates or methacrylate compounds to thereby obtain methacrylic resins having a crosslink structure. In the proposed production processes, although the heat resistance and chemical resistance of methacrylic resin can be improved, the polymerization reaction is likely to suffer sudden runaway, so that controlling of polymerization is difficult. Therefore, the current situation is that the proposed production processes are not widely utilized.

Moreover, as means for improving the impact resistance of methacrylic resins, it has been proposed to employ a method of drawing methacrylic resins according to the biaxial stretching technique or press orienting technique, or a method of adding a rubber component during the polymerization reaction or thereafter. However, the drawing method inevitably causes the methacrylic resin to exhibit optical anisotropy, so that the thus produced methacrylic resin is not suitable to optical uses. Thus, the usage of methacrylic resin is limited. On the other hand, in the method of adding a rubber component, although a polymer designing is conducted by elaborating the composition and structure of rubber component, compounding method and polymerization method, themes still remain in the refractive index difference and compatibility between methacrylic resin as a matrix and rubber component. Further, the improvement of impact resistance attained thereby is still poor.

Meanwhile, inorganic glasses, because of the properties thereof and technical advantage in manufacturing parts, are widely used in transparent parts for automobile, such as a head lamp lens or tail lamp lens, a lamp cover, a roof window, a rear quarter window, a front panel or rear panel and a visor. However, the application of transparent resins to transparent members other than a front window and side windows (part thereof) is rapidly increasing in accordance with strong demands from automobile manufacturers with respect to the automobile weight reduction from the viewpoint of energy saving and environmental protection, capability of free design for coping with diversification of car body design (from the viewpoint of exterior ornamental design and aerodynamics) as regards lamp surroundings and window materials, enhancement of light distribution performance such as the range of illumination or brightness as regards lamp lenses, and avoidance of danger regarding crash breakage morphology, and in accordance with amendment to JASO standards.

As such transparent resins, there can be mentioned, for example, a methacrylic resin (PMMA), a polycarbonate resin (PC), a methacrylic monomer/styrene copolymer resin (MS) , a polystyrene (PS) , a styrene/acrylonitrile copolymer resin (SAN) and a vinyl chloride resin. Of these, conspicuous use is being made of PMMA and PC. The reason is that PMMA is excellent in a balance of transparency, weatherability and mechanical properties and also in moldability, while PC is excellent in transparency, heat resistance, water absorptivity and impact resistance.

However, PMMA is unsatisfactory in heat resistance and impact resistance, while PC is unsatisfactory in rigidity, surface hardness, weatherability and chemical resistance. Consequently, the site (part) where these resins can be used is naturally limited. Therefore, it is strongly demanded to improve the properties of such resins.

For example, when PMMA is used as a lamp lens, it is needed to improve the heat resistance thereof in order to prevent the warpage of lens configuration by thermal deformation. The mainstream of technologies therefor is to copolymerize a monomer of high polarity and bulky structure with MMA. As the mainstream technology, there can be mentioned copolymerization of a monomer, for example, an N-substituted maleimide such as phenylmaleimide or cyclohexylmaleimide, phenyl methacrylate, an alicyclic methacrylic acid ester or an aromatic vinyl with MMA. Further, for improving the impact resistance of PMMA, it is known to use a technology comprising adding a rubber component to MMA and carrying out a graft polymerization thereof.

With respect to PC, in order to prevent marring, it is needed to increase the surface hardness thereof so as to improve the scuff resistance. The mainstream of technologies therefor is that known as hard coating, which comprises forming a high-degree crosslink structure at surface portions of PC to thereby impart a resistance to external force to the PC. As this mainstream technology, specifically, there can be mentioned, for example, a method of coating PC with an organosilane composition liquid and heating the same for curing, a method of coating PC with a polyfunctional acrylate composition liquid and exposing the same to ultraviolet light or electron beams for curing, or a method of sputtering with a metal or metal oxide. The hard coating enables simultaneously improving the weatherability and heat resistance of PC substrate. Because of such an advantage, this technology is widely practiced.

Among transparent parts for automobile, those for which the demand on configuration is especially strong are lamp surroundings constituting ends of automobile outline morphology. On automobile lamp surroundings, there are various configurational demands, for example, a demand for increased curvature to decrease an air resistance, a demand for decrease of occupied volume and a demand for design capable of attracting user's appreciation. These demands are also applicable to a lamp lens. The property especially desired for lamp lens members is the heat resistance. Conventional PMMAs of heat-resistant grade, although the heat resistance is improved over that of ordinary PMMAs being linear polymers, appear to sacrifice other properties, for example, to suffer a drop of impact resistance. Moreover, the technology regarding the PMMAs of heat-resistant grade is, for example, likely to invite runaway of polymerization reaction to thereby render supervision of polymerization control difficult, and thus cannot be stated at all as being a technology that is advantageous from the viewpoint of molding processability.

Meanwhile, PCs are subjected to hard coating before application to lamp surroundings. For ensuring applicability to lamp surroundings of complex configuration, however, it is desired to establish a coating technology of enhanced precision.

PMMA and PC are used as materials of some window members such as those of roof, rear quarter and sides. However, the rigidity thereof is so unsatisfactory that window member substrates should inevitably be thick, contrarily to the demand for weight reduction. In addition, for example, the application of such window member substrates is limited to stationary type windows wherein substrates are fixed by means of metal frames. Thus, the current situation is that they cannot satisfy a variety of demands from automobile users with respect to the appearance and function of automobiles. The rigidity highly depends on the inherent properties of resin, so that improvement thereof is also a serious task.

In the meantime, projectors are commonly used for presentation at company meetings, and used in theaters, culture halls, event halls, etc. In recent years, also, home and personal demands therefor are increasing.

The recent projectors are not limited to simple means for image magnification and projection, such as an overhead projector or a slide projector. Rather, like a rear projection TV, the use thereof as an electronic display is increasing. In particular, with respect to the rear projection TV, it is expected that the use thereof as a home PC for home multimedia, a multiscreen having games incorporated therein, or a vehicle display such as a data indicator of automobile meter or a car navigation display would increase.

Generally, inorganic glasses are used as materials of transparent members, such as a projection lens and a projection screen, for constituting an optical system of rear projection TV. Also, using inorganic glasses as materials thereof is the mainstream of technology with respect to transparent members that form front panels for increasing the visibility of display indication and for, in all aspects, protecting the indication surface of display, for example, front panels of rear projection TV and PDP, which transparent members do not constitute any optical system.

Some problems can be pointed out on such transparent. members. One is reduction of the weight of screen member material to be attained as countermeasures to the weight increase caused by a size increase of rear projection screen. Another problem is demands for resistance to cracking as safety measures or for safety of breakage configuration. The third problem is capability of free design on the shape of screen in the pursuit of attractive display design.

Accordingly, there is a demand for the use of resin as a glass substitute in these transparent members. Now, partly, PMMA of heat-resistant grade is used as a projection lens of rear projection TV. However, the heat resistance thereof is still poor, so that an improvement is demanded. Further, poor rigidity is also a serious problem. The rigidity of PMMA is unsatisfactory for the use in screen members.

It is an object of the present invention to provide a methacrylic resin exhibiting enhanced heat resistance, chemical resistance and impact resistance. It is another object of the present invention to provide a methacrylic resin which is produced without the occurrence of runaway of polymerization reaction at the time of polymerization. It is a further object of the present invention to provide transparent members, including a transparent member for automobileand atransparent memberfor display,constituted of the methacrylic resin of the present invention.

### DISCLOSURE OF THE INVENTION

The methacrylic resin of the present invention is characterized in that it is produced by copolymerizing a composition in the presence of a radical initiator, the composition comprising:
100 parts by weight of methyl methacrylate, and
5 to 50 parts by weight of a compound represented by the general formula: 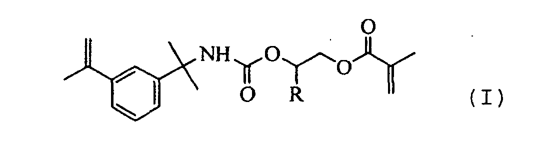 wherein R represents a hydrogen atom or a methyl group.

With respect to the methacrylic resin of the present invention, it is preferred that the radical initiator comprise a mixture of:
(a) at least one organic peroxide having a 10-hr half-life temperature of 50 to 75°C, and
(b) at least one organic peroxide having a 10-hr half-life temperature of 95 to 120°C.

Preferably, the copolymerization is performed at 40 to 170°C.

The transparent member, for example, transparent member for automobile or transparent member for display according to the present invention is produced by molding the above methacrylic resin of the present invention.

### BEST MODE FOR CARRYING OUT THE INVENTION

The present invention will be described in detail below.

### <Methacrylic resin>

The methacrylic resin of the present invention is produced by copolymerizing, in the presence of a radical initiator, a composition comprising methyl methacrylate and a compound represented by the general formula: 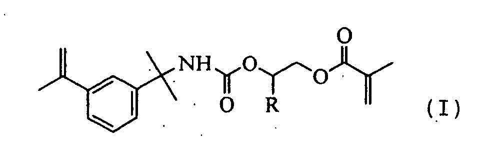 wherein R represents a hydrogen atom or a methyl group.

Specifically, the compound represented by the general formula (I) (compound (I)) is N-(3-isopropenyl-α,α-dimethylbenzyl)-2-methacryloyloxye thyl carbamate, or N-(3-isopropenyl-α,α-dimethylbenzyl)-1-methacryloyloxyp ropan-2-yl carbamate.

The compound (I) is characterized in that it can realize a three-dimensional crosslink while advancing extremely mild polymerization reaction with methyl methacrylate. The reason would be that the isopropenyl group in the molecule has relatively low activity to thereby cause its reaction rate to be low with the result that it participates in polymerization while controlling the reaction of methacrylic group to thereby enable random and mild advancement of polymerization curing as a whole.

As the radical initiator, use can be made of any of organic peroxides commonly added as a radical initiator. For example, use can be made of 2,4-dichlorobenzoyl peroxide, t-butylperoxypivalate, 3,5,5-trimethylhexanoylperoxide, octanoyl peroxide, decanoyl peroxide, lauroyl peroxide, succinic acid peroxide, acetyl peroxide, t-butyl peroxy-2-ethylhexanoate, m-toluoyl peroxide, benzoyl peroxide, t-butylperoxymaleic acid, t-butylperoxylaurate, t-butyl peroxy-3,5,5-trimethylhexanoate, cyclohexanone peroxide, t-butyl peroxyisopropyl carbonate, 2,5-dimethyl-2,5-di(benzoylperoxy)hexane, 2,2-bis(t-butylperoxy)octane, t-butyl peroxyacetate, 2,2-bis(t-butylperoxy)butane, t-butyl peroxybenzoate, n-butyl 4,4-bis(t-butylperoxy)valerate, di-t-butyl diperoxyisophthalate and methyl ethyl ketone peroxide.

These radical initiators may be used individually or in combination.

In the present invention, it is preferred that the radical initiator comprise a mixture of (a) at least one organic peroxide having a 10-hr half-life temperature of 50 to 75°C, and (b) at least one organic peroxide having a 10-hr half-life temperature of 95 to 120°C.

The organic peroxide having a 10-hr half-life temperature of 50 to 75°C (a) can be, for example, any of 2,4-dichlorobenzoyl peroxide, t-butyl peroxypivalate, 3,5,5-trimethylhexanoyl peroxide, octanoyl peroxide, decanoyl peroxide, lauroyl peroxide, succinic acid peroxide, acetyl peroxide, t-butyl peroxy-2-ethylhexanoate, m-toluoyl peroxide and benzoyl peroxide.

The organic peroxide having a 10-hr half-life temperature of 95 to 120°C (b) can be, for example, any of t-butylperoxymaleic acid, t-butyl peroxylaurate, t-butyl peroxy-3,5,5-trimethylhexanoate, cyclohexanone peroxide, t-butyl peroxyisopropyl carbonate, 2,5-dimethyl-2,5-di(benzoylperoxy)hexane, 2,2-bis(t-butylperoxy)octane, t-butyl peroxyacetate, 2,2-bis(t-butylperoxy)butane, t-butyl peroxybenzoate, n-butyl 4,4-bis(t-butylperoxy)valerate, di-t-butyl diperoxyisophthalate, methyl ethyl ketone peroxide, dicumyl peroxide, 2,5-dimethyl-2,5-di(t-butylperoxy)hexane and t-butyl cumyl peroxide.

When the organic peroxide having a 10-hr half-life temperature of 50 to 75°C (a) (referred to as "organic peroxide (a)") is used in combination with the organic peroxide having a 10-hr half-life temperature of 95 to 120°C (b) (referred to as "organic peroxide (b)"), it is preferred that the amount ratio be such that the amount of organic peroxide (a) ≥ the amount of organic peroxide (b). With respect to the organic peroxide (b), the 10-hr half-life temperature thereof is still preferably in the range of 95 to 110°C.

In the copolymerization wherein a mixture of the organic peroxide (a) and the organic peroxide (b) is used as the radical initiator, it is presumed that the organic peroxide having a 10-hr half-life temperature of 50 to 75°C (a) first acts to thereby initiate polymerization and advance initial polymerization, and that, at a certain later stage, the organic peroxide having a 10-hr half-life temperature of 95 to 120°C (b) acts to further advance polymerization and simultaneously advance crosslinking. Therefore, using a mixture of the organic peroxide (a) and the organic peroxide (b) as the radical initiator enables mild advancement of copolymerization reaction, and facilitates avoiding of runaway of polymerization reaction.

With respect to the amount of radical initiator added, it is preferred that the total amount of radical initiators be in the range of 0.01 to 5% by weight based on the composition subjected to copolymerization.

In the production of methacrylic resin according to the present invention, an antioxidant and an antistaticagent can be added to the composition subjected to copolymerization in order to prevent coloration and electrification. Further, other polymerizable monomers may be appropriately added to the composition.

The thus prepared composition is deaerated prior to copolymerization.

The method of copolymerization is not limited. For example, cast polymerization can be performed in the following manner. In the cast polymerization, a mold release agent may be used or may not be used.

The cast polymerization is a method of polymerization wherein a composition prepared in advance is cast in the cavity of a mold for forming a resin molding of desired morphology and wherein a thermal polymerization of the composition is carried out, then the resin molding is taken out from the mold, to thereby obtain a molding. This mold is fitted with a gasket for the purpose of enclosing the composition, causing the mold to follow the polymerization curing shrinkage of the composition, etc.

In the production of a resin molding of plate form, it is common practice to select and use a mold constituted of an inorganic glass or stainless steel and, as the gasket, a sheet or tube made of polyvinyl chloride or silicone resin.

Although the heating temperature at which the copolymerization of the present invention is to be conducted depends on the type and amount of composition and radical initiator added, it is generally preferred that the heating temperature be in the range of 40 to 170°C. Specifically, it is preferred that the temperature at the initial stage of heating be 40°C or higher, especially 50°C or higher, and still especially 60°C or higher, while the temperature at the final stage of heating be 170°C or below, especially 150°C or below, and still especially 130°C or below. Further, it is preferred to employ temperature conditions such that, at each temperature range, a time wherein a given temperature is maintained and a rate of temperature rise are appropriately selected, with stepwise temperature rise realized. Although the period of time in which the polymerization is conducted depends on the heating temperature, it is generally preferred that the polymerization time be in the range of about 4 to 7 hr, especially 5 to 7 hr.

The methacrylic resin of the present invention is excellent in transparency, and the glass transition temperature (Tg) thereof is generally 120°C or higher, preferably 125°C or higher, and still preferably 130°C or higher, exhibiting an excellent heat resistance. The flexural modulus of the methacrylic resin of the present invention is generally 3.2 GPa or higher, preferably 3.6 GPa or higher, and still preferably 4.0 GPa or higher. In the impact resistance test (falling ball test) described later, the height at which the resin plate is still not cracked, while being not greater than 50 cm with respect to common methacrylic resins, is generally 50 cm or higher, preferably 60 cm or higher, still preferably 65 cm or higher, and optimally 70 cm or higher with respect to the methacrylic resin of the present invention. Thus, the methacrylic resin of the present invention exhibits an excellent impact resistance. Moreover, the methacrylic resin of the present invention is resistant to corrosive action by an organic solvent, such as acetone, toluene, xylene or isopropanol, or an alkali solution, such as a sodium hydroxide solution, exhibiting an excellent chemical resistance.

With respect to the methacrylic resin of the present invention, as regards polymerization reaction, the polymerization exhibits mild advancement without the danger of runaway reaction, so that the temperature control for polymerization can be easily accomplished. Thus, the methacrylic resin is excellent in molding processability. Further, the thus obtained methacrylic resin exhibits optical and mechanical isotropy, so that the properties within each individual molding are uniform. Thus, the surface condition of resin molding is strikingly excellent.

In summing up, the methacrylic resin of the present invention is one whose properties, such as heat resistance, impact resistance, surface hardness, rigidity and chemical resistance, have been strikingly enhanced without detriment to the inherent transparency of methacrylic resin. Thus, the methacrylic resin can be widely used in glazing materials, various covers, signboards, front panels for PDP and other displays, screen substrates for projectors, etc. Further, the methacrylic resin of the present invention enables producing an improved resin plate of PMMA with high productivity. Hence, the methacrylic resin of the present invention can appropriately be used for molding of a variety of transparent members, in particular, a transparent member for automobile and a transparent member for display. With respect to the transparent member for automobile, the methacrylic resin can appropriately be used in lamp surroundings requiring high heat resistance or window members requiring high impact resistance.

### <Usage>

The described methacrylic resin of the present invention without exception is excellent in transparency, heat resistance, chemical resistance and impact resistance, so that it is naturally used as a substitute for common methacrylic resins and can further be used as a substitute for contemporary polycarbonate resins. The methacrylic resin of the present invention can find wide application to, for example, glazing materials, various covers, signboards, front panels for PDP and other displays, screen substrates for projectors, liquid crystal plastic substrates, organic EL substrates, touch panel substrates, etc.

In particular, the methacrylic resin of the present invention, because of the exhibition of the above excellent properties, can appropriately be used in molding of a variety of transparent members, for example, a transparent member for automobile and a transparent member for display.

As the transparent member for automobile, there can be mentioned a head lamp lens or tail lamp lens, a lamp cover, a roof window, a rear quarter window, a front panel or rear panel, a visor or other molding for automobile.

As the transparent member for display, there can be mentioned, for example, an optical member such as a projection lens or a projection screen, or a front panel for protecting the indication surface of display. More specifically, there can be mentioned, for example, a molded part for projector or rear projector (e.g., a diffusion type rear projection screen, a lenticular screen, a spherical lens type or orthogonal lenticular type lens array screen, a Fresnel lens equipped diffusion type or Fresnel lens equipped lenticular screen, a projection lens for rear projection TV or a front panel for rear projection TV), or a front panel for PDP.

The present invention enables providing the methacrylic resin which is excellent in transparency, heat resistance, chemical resistance and impact resistance with high productivity without the occurrence of runaway of polymerization reaction.

Further, the present invention enables providing transparent members including a transparent member for automobile and a transparent member for display, which are produced by molding the above methacrylic resin of the present invention and which are excellent in properties such as transparency, heat resistance and impact resistance.

### EXAMPLE

The present invention will be further illustrated below with reference to the following Examples, which, however, in no way limit the scope of the invention. In the following Examples and Comparative Examples, the parts by weight refer to g.

### (Evaluation method)

The properties of each resin were evaluated in the following manner.

Easiness of polymerization: The occurrence and degree of runaway reaction (*wakame* phenomenon: phenomenon wherein the resin surface becomes barky and disorderly) were visually inspected on the following criterion:
○: not occurred,
Δ: partially occurred, and
×: occurred at all surfaces.

Heat resistance: Tg was measured by the use of TMA analyzer manufactured by K.K. Rigaku.

Impact resistance: Steel ball of 114 g was dropped on each resin plate of 2 mm thickness, and heights at which resin plates were not cracked were compared.

Surface hardness: Pencil hardness was measured in accordance with Japanese Industrial Standard (JIS) K5401.

Rigidity: Flexural modulus was measured in accordance with JIS K6911.

Chemical resistance: Resistance to each of acetone, IPA (isopropanol) , toluene and 10% NaOH solution was visually evaluated in accordance with JIS K7114 on the following criterion:
○: no abnormality recognized,
Δ: cracked, and
×: dissolved.

### (Preparation Example 1)

242.8 g of 3-isopropenyl-α,α-dimethylbenzyl isocyanate and 0.12 g of dibutyltin dilaurate were charged in a four-necked flask equipped with a stirrer, a thermometer, a drying tube and a dropping funnel. At an internal temperature of 45 to 50°C, 157.0 g of 2-hydroxyethyl methacrylate was dropped into the flask over a period of 2 hr. Thereafter, aging reaction of the mixture was carried out at 50°C for 8 hr. Thus, compound (1) was obtained.

### (Preparation Example 2)

233.0 g of 3-isopropenyl-α,α-dimethylbenzyl isocyanate and 0.12 g of dibutyltin dilaurate were charged in a four-necked flask equipped with a stirrer, a thermometer, a drying tube and a dropping funnel. At an internal temperature of 45 to 50°C, 167.0 g of 2-methyl-1-methacryloyloxyethanol was dropped into the flask over a period of 2 hr. Thereafter, aging reaction of the mixture was carried out at 50°C for 8 hr. Thus, compound (2) was obtained.

### Example 1

0.3 part by weight of benzoyl peroxide and 0.2 part by weight of t-butyl peroxy-3,5,5-trimethylhexanoate were added to a mixture of 100 parts by weight of MMA and 10 parts by weight of compound (1) synthesized according to the same recipe as in Preparation Example 1, mixed together well and deaerated to provide for polymerization. The thus obtained composition was cast into a cast polymerization mold of 1 mm space distance equipped with a gasket of polyvinyl chloride, and heated at a constant temperature of 60°C for 2 hr. Then, the temperature was raised from 60°C to 130°C over a period of 2 hr, and maintained at 130°C for 1 hr, thereby performing polymerization. During the polymerization, no abnormality was recognized. Thereafter, a molding was taken out from the mold. Thus, a transparent resin plate with excellent surface condition was obtained.

### Example 2

0.3 part by weight of t-butyl peroxy-2-ethylhexanoate and 0.2 part by weight of t-butyl peroxy-3, 5, 5-trimethylhexanoate were added to a mixture of 100 parts by weight of MMA and 25 parts by weight of compound (1) synthesized according to the same recipe as in Preparation Example 1, mixed together well and deaerated to provide for polymerization. The thus obtained composition was cast into the same cast polymerization mold as used in Example 1, and heated at a constant temperature of 70°C for 2 hr. Then, the temperature was raised from 70°C to 130°C over a period of 2 hr, and maintained at 130°C for 1 hr, thereby performing polymerization. During the polymerization, no abnormality was recognized. Thereafter, a molding was taken out from the mold. Thus, a transparent resin plate with excellent surface condition was obtained.

### Example 3

Polymerization was carried out according to the same recipe as in Example 2 except that 45 parts by weight of compound (1) was used in place of the 25 parts by weight of compound (1) employed in Example 2. During the polymerization, no abnormality was recognized. Thereafter, a molding was taken out from the mold. Thus, a transparent resin plate with excellent surface condition was obtained.

### Example 4

0.3 part by weight of benzoyl peroxide and 0.2 part by weight of t-butyl peroxylaurate were added to a mixture of 100 parts by weight of MMA and 25 parts by weight of compound (2) synthesized according to the same recipe as in Preparation Example 2, mixed together well and deaerated to provide for polymerization. The thus obtained composition was cast into the same cast polymerization mold as used in Example 1, and heated at a constant temperature of 60°C for 2 hr. Then, the temperature was raised from 60°C to 110°C over a period of 2 hr, maintained at 110°C for 1 hr, and maintained at 130°C for 1 hr, thereby performing polymerization. Duringthe polymerization,no abnormality was recognized. Thereafter, a molding was taken out from the mold. Thus, a transparent resin plate with excellent surface condition was obtained.

### Example 5

0.3 part by weight of t-butyl peroxy-2-ethylhexanoate and 0.2 part by weight of t-butyl peroxy-3,5,5-trimethylhexanoate were added to a mixture of 100 parts by weight of MMA and 25 parts by weight of compound (1) synthesized according to the same recipe as in Preparation Example 1, mixed together well and deaerated to provide for polymerization. The thus obtained composition was cast into a spectacle lens polymerization mold equipped with a gasket of elastomer, and heated at a constant temperature of 70°C for 2 hr. Then, the temperature was raised from 70°C to 130°C over a period of 2 hr, and maintained at 130°C for 1 hr, thereby performing polymerization. During the polymerization,no abnormality was recognized. Thereafter, a molding was taken out from the mold. Thus, a transparent lens molding of refractive index nd = 1.55, Abbe number νd = 43 and Tg = 150°C was obtained.

The thus obtained molding was also very excellent in scuff resistance and impact resistance. Both the scuff resistance and impact resistance thereof were evaluated as ○.

The properties of obtained lens molding were measured and evaluated in the following manner.

Refractive index and Abbe number: measured at 20°C by means of a Pulfrich refractometer.

Scuff resistance: The surface of each resin molding was rubbed with a steel wool of #0000, and the surface resistance to scuffing was inspected and graded as follows:
○: no scuffing at all even with strong rubbing,
Δ: slight scuffing with strong rubbing, and
×: scuffed even with weak rubbing.

Impact resistance: A steel ball of 16 g was dropped from a height of 127 cm onto the center of each molded lens, and the resistance to cracking was inspected and graded as follows:
○: not cracked,
Δ: not cracked but had minute crazes, and
×: cracked.

### Comparative Example 1

0.5 part by weight of benzoyl peroxide was added to 100 parts by weight of MMA, mixed together well and deaerated to provide for polymerization. The thus obtained composition was cast into the same cast polymerization mold as used in Example 1, and heated at a constant temperature of 60°C for 2 hr. Then, the temperature was raised from 60°C to 90°C over a period of 1 hr, maintained at 90°C for 1 hr, and maintained at 120°C for 1 hr, thereby performing polymerization. Duringthe polymerization,no abnormality was recognized. Thereafter, a molding was taken out from the mold. Thus, a transparent resin plate with excellent surface condition was obtained.

### Comparative Example 2

0.5 part by weight of benzoyl peroxide was added to a mixture of 100 parts by weight of MMA and 25 parts by weight of EGDM (ethylene glycol dimethacrylate), mixed together well and deaerated to provide for polymerization. The thus obtained composition was cast into the same cast polymerization mold as used in Example 1, heated at a constant temperature of 50°C for 2 hr, and heated at a constant temperature of 70°C for 1 hr. Then, the temperature was raised from 70°C to 90°C over a period of 1 hr, maintained at 90°C for 1 hr, and maintained at 130°C for 1 hr, thereby performing polymerization. During the polymerization, at about 70°C, the reaction exhibited runaway with the occurrence of *wakame* phenomenon. Thereafter, a molding was taken out from the mold. Thus, a transparent resin plate was obtained. However, the surface condition thereof was poor.

With respect to the above Examples 1 to 4 and Comparative Examples 1 and 2, the monomer composition ratio and the evaluation results of resin properties are listed in Table 1.

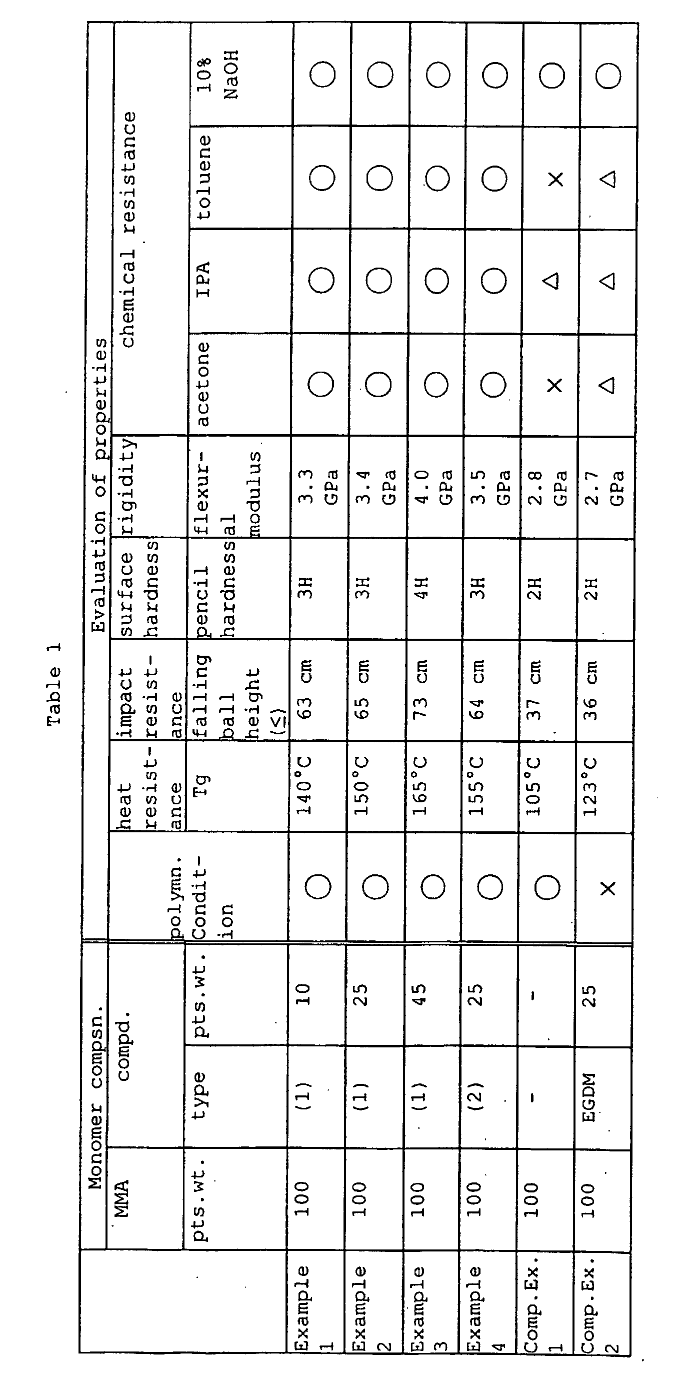

## Claims

1. A methacrylic resin produced by copolymerizing a composition in the presence of a radical initiator, the composition comprising:
100 parts by weight of methyl methacrylate, and
5 to 50 parts by weight of a compound represented by the general formula: 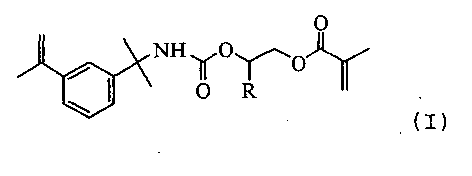 wherein R represents a hydrogen atom or a methyl group.

2. The methacrylic resin as claimed in claim 1, wherein the radical initiator comprises a mixture of:
(a) at least one organic peroxide having a 10-hr half-life temperature of 50 to 75°C, and
(b) at least one organic peroxide having a 10-hr half-life temperature of 95 to 120°C.

3. The methacrylic resin as claimed in claim 1 or 2, wherein the copolymerization is performed at 40 to 170°C.

4. A transparent member produced by molding the methacrylic resin as claimed in any of claims 1 to 3.

5. A transparent member for automobile produced by molding the methacrylic resin as claimed in any of claims 1 to 3.

6. A transparent member for display produced by molding the methacrylic resin as claimed in any of claims 1 to 3.
